# EUROPEAN PATENT SPECIFICATION

(11) **EP 4 425 214 B1**
(45) Date of publication and mention of the grant of the patent: **09.09.2026**
(21) Application number: 23159865.7
(22) Date of filing: 03.03.2023
(51) Int. Cl.: G01S 13/88, G01S 13/34, G01S 13/87, E21D 9/00

(54) **METHOD FOR AND SYSTEM OPERATING AN UNDERGROUND MINING AND TUNNELING MACHINE**
VERFAHREN UND SYSTEM ZUM BETREIBEN EINER UNTERTAGE-BERGBAU- UND TUNNELBAUMASCHINE
PROCÉDÉ ET SYSTÈME DE FONCTIONNEMENT D'UNE MACHINE D'EXPLOITATION MINIÈRE SOUTERRAINE ET DE CREUSEMENT DE TUNNEL

(43) Date of publication of application: 04.09.2024
(73) Proprietor: Indurad GmbH, 52070 Aachen (DE)
(72) Inventor: RABEL, Matthias, 89075 Ulm (DE); WINKEL, Reik, 52070 Aachen (DE)
(74) Representative: Walther Bayer Faber Patentanwälte PartGmbB

(56) References cited:
- US-A- 4 774 470
- US-A1- 2015 233 242
- US-B2- 11 506 053

## Description

The present invention relates to a method for controlling the pose of at least a part of an underground mining or tunneling machine within a heading by means of a pose control system. The invention also relates to a system for operating such a method. The heading relates to any kind of an underground mining area like a mining tunnel, a mining drift, a road or rail tunnel, mining adit, all them hereinafter named as an underground heading.

### PRIOR ART

Document US 11,506,053 B2 discloses a method for controlling the position of at least a part of an underground mobile machine basing on LASER-technology. The LASER-technology forms the basis for a control system to control the mobile machine in order to collect information about the pose of the underground mobile machine, a rotatable LASER source sends LASER light and return light sensors receives reflected LASER light. The reflection can base on the walling of the heading, and the reflected light indicates the distance to at least a side walling or the front of the heading. A co-ordinate reference point comprises a pattern of variable reflectivity and provides at least a 2D co-ordinate position. A processor determines an absolute co-ordinate position in space of the mobile machine as the mobile machine moves through the underground mine. The processor collects intensity values of reflective LASER light for multiple respective rotation angles and detects the pattern of the reference point in the multiple intensity values of reflected LASER light and determines the absolute co-ordinate position in space of the mobile machine based on spatial information of the detected pattern.

It is known from the paper published by Anthony Stentz, et.al.; Robotics Institute; Carnegie Mellon University; Pittsburgh PA 15213; Title: " Position Measurement for Automated Mobile machinery", that LASER technology can be applied for a heading control. The purpose of the heading control system is to measure heading and lateral offset of the underground mobile machine.

Unfortunately, the circumstances of underground mobile machines within a heading are rough, and dirt, dust, dust fog and the like make the use of optic measurement technology difficult. The LASER source as well as reflecting elements, so far they are applied, must be protected against dirt, dust and so on. This leads to a frequent failure of such systems which unfortunately must be re-implemented after being put back into operation. Thus, this technology allows rather an "on demand positioning" rather an "online real-time positioning".

### DISCLOSURE OF INVENTION

It is an object of the present invention to provide an improved method for controlling the pose of at least a part or the entire of an underground mobile machine within an underground heading, accordingly it is an objective of the invention to provide a new method and moreover an improved system for operating the improved method. The method should be formed to be operated reliable and durable, and the measuring result, in particular the accuracy of the measured pose, should be improved. In particular, when the underground mobile machine forms a tunnel drilling machine for advancing a tunnel in the underground in one main direction, the pose of the underground mobile machine must be continuously measured and controlled with an increased accuracy.

This objective is achieved by a method as taught by claim 1 and by a system as taught by claim 10 of the present invention. Advantageous embodiments of the inventive method and the related system are defined in the sub claims.

The method according to the present invention comprises at least the following steps: Providing at least two RADAR antennas, providing at least one or more RADAR reflecting modules, whereas the RADAR antennas or the RADAR reflecting module are arranged at least twice forming the pose control system, whereas the RADAR antennas and the at least one RADAR reflecting module are arranged in a triangular formation, identifying at least one defined measuring position in the heading distal to the mobile machine, defining a RADAR aligning range between the mobile machine and the defined measuring position forming two end points, whereas at a first end point the at least two RADAR antennas are arranged and at a second end point the at least one RADAR reflecting module is arranged, and sending at least one RADAR ray with each of the RADAR antennas towards the at least one RADAR reflecting module and at least indirectly reflecting the RADAR ray by the at least one RADAR reflecting module and receiving the at least one reflected RADAR ray by the RADAR antennas and computing the pose of at least the part of the or the entire underground mobile machine by means of a computing unit of the system.

The basic measuring principle comprises two RADAR antennas which distance in between the RADAR antennas is known by the pose control system, in particular by the computing unit. Both RADAR antennas are interacting with the RADAR reflecting module, and when more than one RADAR reflecting module is applied, each RADAR antenna is communicating with each RADAR reflecting module or this module has been configured before with a clear identity pattern. The basic structure features a triangular formation comprising the two RADAR antennas spaced apart from each other, and the RADAR antennas are directed towards the RADAR reflecting module. The RADAR aligning range is defined as the distance between the two RADAR antennas and the RADAR reflecting module, and the distance is defined between the first end point and the second end point, which end points are defined between the underground mobile machine and the measuring position.

In the sense of the present invention, the RADAR antennas forming the first end point can be attached to the underground mobile machine or, as an alternative to this arrangement, can be attached to the measuring position. On the other hand, the RADAR reflecting module forming the second end point can be arranged to the measuring position or, according to the alternative, can be arranged to the underground mobile machine. As a result, the system can be operated with the RADAR antennas attached to the machine and the RADAR reflecting module attached to the measuring position or the other way around.

Due to the robust RADAR application, the method can be operated with a high reliability and a high accuracy despite the presence of dust, dirt, dust fog and other adversities of a rough environment. In particular the use of optical measurement equipment is avoided.

The distance between the two RADAR antennas and the at least one RADAR reflecting module is measured in such a way that the RADAR aligning range is 5 times to 1.000 times and/or 20 times to 500 times and/or 50 times to 150 times of the distance between the two RADAR antennas at the common end point. The distance between the at least two RADAR antennas as well as the RADAR aligning range can be measured and programmed into the computing unit. Accordingly, the distance between the first and the second end points can be measured and also programmed into the computing unit.

When operating the pose control system according to the method, an absolute deviation of the actual underground mobile machine pose relative to the wanted pose can be determined, because it is possible to determine absolute values of deviations in at least the most important axis, in particular the vertical axis, in a pitch or in a lateral axis and/or a longitudinal axis. The pose of the underground mobile machine relates to the absolute position along the said axis as well as a rotation about each of the axis. As a result, the pose control system according to the invention can be operated for the determination of a deviation in at least one axis or more than one axis of the general known six axis of freedom of an object in space.

According to a preferred embodiment of the invention the RADAR antennas are arranged at the underground mobile machine spaced apart to each other and the at least one RADAR reflecting module is arranged in the heading, in particular on a mobile receiving means standing in the heading or at the inner walling of the heading. According to yet another advantage, at least two, three or more RADAR reflecting module s are arranged in the triangular formation combined with the RADAR antennas, leading to more than one triangular formation at all. Each RADAR reflecting module reflects each of the RADAR rays transmitted by both RADAR antennas and both RADAR antennas receive the reflected RADAR rays which are computed by the computing unit of the pose control system. The measuring principle bases on a run time comparison between the first and the second or e.g. the third or the next RADAR antenna relative to the RADAR reflecting module, and when the underground mobile machine features a deviation the RADAR antennas follow the deviation when they are mounted to the machine. When the method and the system to operate the method gets implemented, a referencing is necessary to align the at least one reflecting means relative to the RADAR antennas. This alignment can be operated with laser measuring technology if necessary. For the later use of the pose control system for running the inventive method, no more optic measurement systems are necessary for the measuring and controlling itself, and the method bases on the exclusive use of RADAR technology.

According to jet another preferred aspect of the inventive method the RADAR antennas are operated by FMCW RADAR technology in a frequency range of at least a part of the E-band and/or in a frequency range of 60GHz to 90GHz or 75GHz to 85GHz and/or 76GHz to 81GHz. The band wide can be 1GHz to 5GHz, and the range of 71.5GHz to 83.5GHz can as well be considered. When the RADAR system relates to an additional applied UBW system, the RADAR frequency can also range from 57GHz to 64GHz or specifically 36,4GHz. With changing frequency legislation other yet unknown frequency ranges and bandwidth can be used.

The RADAR antennas can emit RADAR rays which are modulated with an ascending and/or descending frequency in a repeating period, whereas the frequency emitted by a first RADAR antenna is different to the frequency emitted by at least a second RADAR antenna and so on. When the frequencies of the RADAR rays transmitted by the RADAR antennas are different, each received RADAR ray can be dedicated to a certain antenna by means of the computing unit of the pose control system. The FMCW RADAR technology with the use of varying frequencies is described in conjunction with the embodiment below.

The RADAR reflecting modules can advantageously be performed as horn reflectors with a trihedral reflector body forming a reflecting screen, and the RADAR reflecting modules may comprise a voice coil, which voice coil can be connected to the reflecting screen in such a way that the reflecting screen can be mechanically excited by the voice coil or other mechanical actuator. The mechanical or dynamical exciting of the reflecting screen in particular in a back-and-forth movement makes it possible for the pose control system to differ several RADAR reflecting modules from each other, because the RADAR rays which reflect by at different reflecting screens feature the specific exciting or moving pattern.

When the RADAR rays reflect by reflecting screens which are dynamically excited, the impressed moving pattern of each of the reflecting screens of the RADAR reflecting modules are impressed into the RADAR rays reflecting by the reflecting screens. By this way the posed control system and in particular the computing unit can distinguish said reflecting RADAR rays from different reflecting screens and each received RADAR ray transmitted by the RADAR antennas can be dedicated to a certain reflecting screen and thus to a certain RADAR reflecting module.

As an advantage, the back-and-forth movement of the reflecting screen caused by the voice coil is aligned with the RADAR aligning range, in such a way, that the direction of the back-and-forth movement is directed towards the RADAR antennas.

According to yet another embodiment of the method the pose control system may additionally comprise an so called WB (Wide Band) or UWB (Ultra Wide Band) positioning unit arranged in conjunction with the underground mobile machine and comprising tags and anchors communicating with each other, whereas the pose control system calculates at least a part of the pose of the underground mobile machine in the heading. As an example only, the tags can be attached to the underground mobile machine, at least two or more tags, and the anchors are arranged at the walling of the heading in particular in such a position that the anchors surround the underground mobile machine. The location, the anchors and the tags are attached, can also be the other way around.

Each of the tags attached to the machine can communicate with dedicated anchors in the heading and by measuring the distance between each of the tags and anchors the computing unit of the pose control system can calculate the pose of the machine within the heading. In particular, parts of the underground mobile machine can be measured in their position relative to the base body of the machine, e.g., when the underground mobile machine comprises a concrete spray system or the like.

In the sense of the invention, it is also possible that the RADAR system with the RADAR antennas are used to determine the general pose of the underground mobile machine within the heading, and the WB or UWB positioning unit may be applied redundant to the operation of the RADAR system or the WB or UWB positioning unit is used to determine positions of moved parts of the machine relative to the base body of the machine.

In the sense of the invention more than two RADAR antennas may be applied, e. g. for RADAR antennas, and more than one RADAR reflecting module can be applied, e.g. four or preferred five RADAR reflecting modules. The RADAR antennas as well as the RADAR reflecting modules can be mounted on carrier boards, and the carrier boards can be installed to the underground mobile machine or to the mobile receiving means standing in the heading. As a result, on a first carrier board only RADAR antennas are arranged forming the first end point and on another carrier board only RADAR reflecting modules are arranged forming the second end point.

The invention is further directed to a system for operating the method as described above, whereas the system comprises at least two RADAR antennas and at least one RADAR reflecting module, whereas the RADAR antennas and the at least one RADAR reflecting module are arranged in a triangular formation, wherein a defined measuring position in the heading is arranged distal to the mobile machine and a RADAR aligning range is measured between the underground mobile machine and the defined measuring position. The RADAR antennas on the one end side and the at least one RADAR reflecting module on the other end side define two end points.

In other words, at a first end point the at least two RADAR antennas are arranged and at a second end point the at least one RADAR reflecting module is arranged, and whereas the RADAR antennas are each formed to transmit a RADAR ray to the at least one RADAR reflecting module and the at least one RADAR reflecting module is formed to reflect the RADAR ray back and towards the RADAR antennas and the RADAR antennas are formed to receive the reflected RADAR rays, whereas the computing unit is formed for computing the pose of at least one part of the underground mobile machine by the received RADAR ray signal.

According to an advantageous embodiment the RADAR antennas are received on a carrier board having main dimensions of less than 1.5 m, preferred less than 75 cm and most preferred less than 50 cm and/or the RADAR reflecting modules are received on a carrier board having main dimensions of less than 1.5 m preferred less than 75 cm and most preferred less than 50 cm. The carrier boards can be direct or indirect attached to the underground mobile machine and/or the mobile receiving means standing in the heading or the carrier boards can be attached to the inner walling of the heading. The smaller the packaging the easier the use and the higher the acceptance, whereby the accuracy is reduced with smaller size.

The RADAR antennas are provided with a FMCW RADAR technology with a frequency range of at least a part of the so-called E-Band and/or in a frequency range of 60GHz to 90GHz and/or 70GHz to 85GHz and/or 76GHz to 81GHz. If the system comprises an additional UWB positioning unit, which is formed with tags and anchors, the communication between the tags and anchors may feature a frequency in the range of 3GHz to 10GHz and/or 5GHz to 8GHz and/or 6GHz to 7GHz and/or having a band wide of 500MHz according to current local frequency regulation.

The RADAR reflecting modules may be passive modules or active modules and may comprise a voice coil and a reflecting screen for reflecting a RADAR ray, whereas the voice coil is formed to mechanically and/or dynamically excite the reflecting screen with a back-and-forth movement in the line of the RADAR aligning range, whereas different RADAR reflecting module s feature different exciting frequencies or moving patterns.

The RADAR ray transmitted by a first RADAR antenna and reflected by the RADAR reflecting module is receivable by the first RADAR antenna and by the at least one second RADAR antenna. In other words, each RADAR ray transmitted by each of the RADAR antennas may be reflected by each of the RADAR reflecting module s and the reflected RADAR ray may be received by each of the RADAR antennas.

In the sense of the invention, the system can also comprise an UWB positioning unit arranged in conjunction with the underground mobile machine and comprising tags and anchors communicating with each other, whereas the pose control system is formed to calculate at least a part of the pose of the underground mobile machine in the heading.

### PREFERRED EMBODIMENT OF THE INVENTION

The aforementioned method steps and components of the system, as well as the claimed steps and the components to be used in accordance with the invention in the described embodiments, are not subject to any special exceptions with respect to their succession of steps, the size, shape, the material selection and/or the technical concepts such that the selection criteria known in the pertinent field can be applied without limitations.

Additional details, characteristics and advantages of the object of the invention are disclosed in the sub claims and the following description of the respective figures shows preferred embodiments of the system and the method according to the invention. It is shown in:
- Fig. 1: a schematic view of a pose of an underground mobile machine in a heading, whereas a pose control system is applied to the underground mobile machine,
- Fig. 2: a mobile receiving means to be positioned in the back of the heading (outby of the machine), whereas a number of RADAR reflecting modules are applied on the receiving means,
- Fig. 3: a schematic view of a RADAR reflecting module, comprising a reflecting screen and a mechanical actuator in form of a voice coil connected to the reflecting screen,
- Fig. 4: diagrams of the modulated frequencies of the transmitted RADAR rays and
- Fig. 5: a schematic view of an underground mobile machine to which a UWB positioning unit is additionally applied.

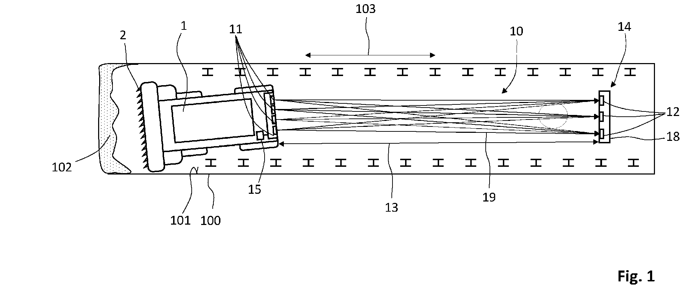

Figure 1 shows a schematic top view on an underground mobile machine 1 situated in a heading 100, and the machine 1 is surrounded by a walling 101 of the heading 100. The underground mobile machine 1 forms an underground mining machine 1, but the machine can also be applied for non-digging technologies like any other underground applications like concrete spray technologies or similar. Accordingly, and as an example only, the underground mobile machine 1 features a tunnel drill 2, in order to engage into the end face 102 of the heading 100, whereas the underground mobile machine 1 is depicted in a situation having a deviation in the vertical axis relative to the longitudinal extension 103 of the heading 100.

When the tunnel drill 2 engages into the end face 102 of the heading 100 and pushes ahead with the heading 100 in the longitudinal extension 103, it is important to ensure a correct pose of the machine 1 in particular with regard to the longitudinal extension 103 of the heading 100. In order to control the pose of the machine 1, a pose control system 10 according to the invention is applied. The main components of the pose control system 10 are RADAR antennas 11, which antennas 11 are attached to the machine 1, and the RADAR reflecting modules 12, which are arranged in the heading 100 spaced apart to the underground mobile machine 1 at a defined measuring position 14. The RADAR reflecting modules 12 may be received by a mobile receiving means 18, which e.g. can stand on the floor of the heading 100 or, as an alternative, can be attached to the inner walling 101 of the heading 100. As an alternative, the RADAR reflecting modules 12 can also be attached to the underground mobile machine 1 and the RADAR antennas 11 can be attached to the receiving means 18, standing on the floor of the heading 100.

Between the RADAR antennas 11 and the RADAR reflecting modules 12 is measured a RADAR aligning range 13, which e.g. measures several meters. A computing unit 15 of the pose control system 10 is formed to calculate the pose of the machine 1 basing on measuring the position of the RADAR reflecting modules 12 relative to the RADAR antennas 11. This method is operated as follows: The RADAR antennas 11 transmit a RADAR ray 19 toward the RADAR reflecting modules 12, and the RADAR reflecting modules 12 reflect the RADAR rays back to the RADAR antennas 11, which antennas 11 receive the reflected RADAR rays 19. After a first initialization, comprising a referencing of the pose of the machine 1 relative to the RADAR reflecting modules 12, a deviation of the RADAR antennas 11 and thus a deviation of the machine 1 can be calculated by the computing unit 15, which may lead to a signal which is visible for a user or which can automatically correct the pose of the machine 1 to keep a deviation of the pose within defined limits.

The embodiment of the pose control system 10 shows four RADAR antennas 11, which are attached to the machine 1, and three RADAR reflecting modules 12, which are attached to the mobile receiving means 18 at the defined measuring position 14. Within the scope of the invention at least two RADAR antennas 11 or more than two, in particular three, four or more than four RADAR antennas 11 can be applied. On the other hand, at least one RADAR reflecting module 12 must be applied, whereas two, three, four or more than four RADAR reflecting modules 12 are preferably applicable. Each of the RADAR antennas 11 emit RADAR rays 19, whereas the frequency or the modulation of each emitted RADAR ray 19 of the RADAR antennas 11 have a dedicated reflecting pattern due to an active modulation of the RADAR reflecting modules 12. In this regard, the computing unit 15 can distinguish different reflected RADAR rays, whereas also the RADAR reflecting modules 12 can be modulated, in order to imprint a certain pattern to the reflected RADAR ray 19, and the computing unit 15 is able to distinguish different RADAR reflecting modules 12. Within this field of values with different value frequencies and different patterns of the reflected RADAR rays imprinted by the RADAR reflecting modules, the computing unit 15 is enabled to calculate the pose of the machine 1 within the heading 100.

The embodiment according to Figure 1 shows the application of the RADAR antennas 11 in attachment to the machine 1, whereas as an alternative it is thinkable that also the RADAR reflecting modules 12 are applied to the machine 1 and the RADAR antennas 11 can be positioned in the defined measuring position 14 within the heading 100.

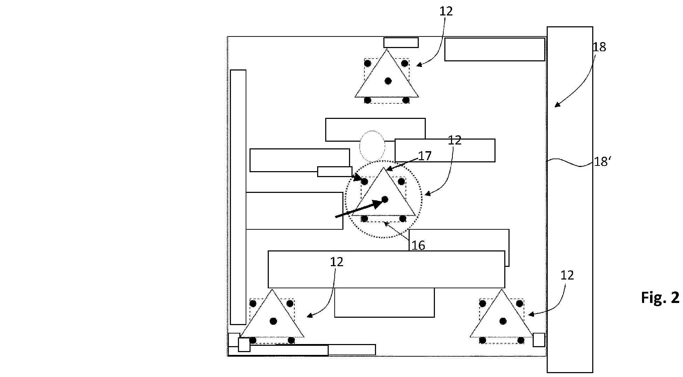

Figure 2 shows a schematic view of the mobile receiving means 18, which can be positioned in the heading 100 as shown in Figure 1. The mobile receiving means 18 forms a carrier board 18' having an edged length of e.g. 50 cm. On the front of the carrier board 18' are applied four RADAR reflecting modules 12. The RADAR reflecting modules 12 comprise at least a voice coil 16 and a reflecting screen 17, and the reflecting screen 17 can be mechanically and/or dynamically excited with a back-and-forth movement perpendicular to the depiction plane. The RADAR reflecting module 12 in the center area of the carrier board 18' forms a redundant module 12, whereas the RADAR reflecting modules 12 in the upper position and the RADAR reflecting modules 12 in the left and right lower position would already be sufficient for determining the entire pose of the underground mobile machine 1 by means of the pose control system 10 as described in conjunction with Figure 1.

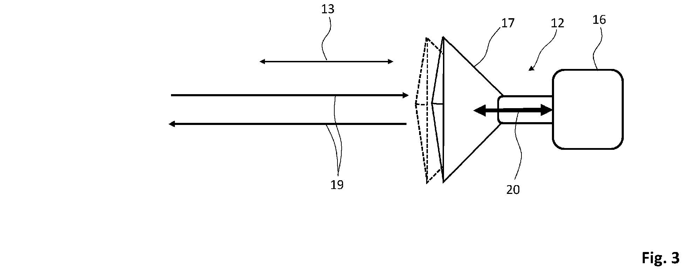

The voice coils 16 of each of the modules 12 can be connected to an interface that allows to set different modulation variations in the modules 12 to distinguish the reflected rays for the RADAR antennas 11 by the computing unit 15. The reflecting screen 17 can be a trihedral reflector, as it is described in conjunction with the following figure 3.

Figure 3 shows a schematic view of a RADAR reflecting module 12 as it can be applied in the pose control system 10 according to the invention. The RADAR reflecting module 12 comprises the voice coil 16 and the reflecting screen 17, and the reflecting screen 17 can be excited with a mechanically oscillation or vibration in the movement direction 20. This direction 20 of the modulation movement is aligned with the direction of the RADAR aligning range 13, in which direction the RADAR rays 19 are running to and forth the reflection module 12. Each of the reflection modules 12 feature a different modulation pattern to enable the RADAR antennas 11 to distinguish the different reflections of the several RADAR reflecting modules 12 by the computing unit 15.

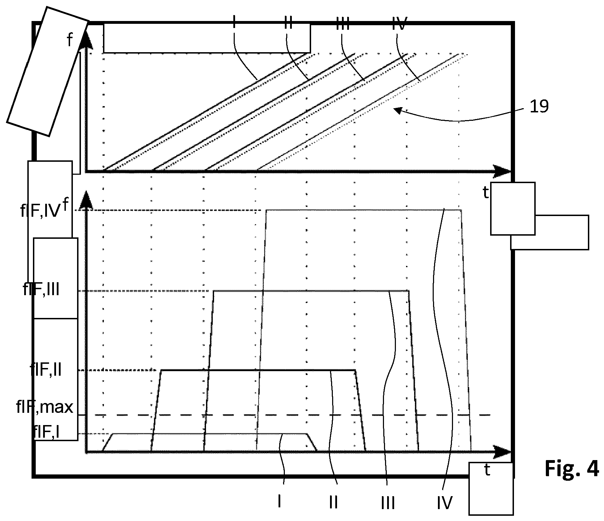

Figure 4 shows a diagram of a spurious free interaction of several RADAR devices. RADAR devices are transmitting and receiving electromagnetic waves, hereinafter called RADAR rays 19. On short distances up to a few km, a modulation scheme called FMCW can be used (Frequency Modulated Continuous Wave). A possible measurement variant uses uprising frequency ramps, so a RADAR starts a transmission at a lower frequency and rises the transmitted frequency continuously up to an upper frequency limit and stops transmission or directly jumps back and starts again the transmission. Any kind of frequency variation, e.g., down ramp, triangle or shuffled segments of the ramp can be transmitted.

Typically, the signal received by RADAR antennas is compared to the actual transmitted frequency, whereas the received signal is delayed by the propagation path from the transmitter antenna towards the reflector and back to the transmitter antenna. This frequency difference together with the slope of the transmitted signal can be converted into a delay time. Using the speed of light, it can be converted to a distance. Which is twice the real distance between a transmitter and a reflector, including device internal delays of the RADAR device that must be subtracted.

Obviously, more than one RADAR devices operated in the same area, not isolating the transmitted signal from each other, can receive also the signals of the other RADARS. Worst case, this destroys the own measurement, or it creates ghost targets. Since the different RADARS are normally not exactly identical during reception, at least there might be spurious events disturbing the signal.

To prevent this, a variety of countermeasures can be taken, e.g. blocking the signal of other RADARS spatial, timely or by just selecting different transmit frequencies. In the described use case, the number of RADAR devices should ideally measure at exactly the same time, since the measured scene is changing due to movements and vibration. As described, this would not work, causing disturbances. A mechanism needs to be applied to prevent disturbances and minimizes the delay to the other RADAR distance measurements.

As an example, the upper diagram in Fig.4 is showing four RADAR devices I, II, III, IV with their similar uprising frequency variation. The horizontal axis represents the time t, the vertical axis represents the frequency f. There are with four double lines I, II, III, IV drawn, for every RADAR one double line (solid and dashed). Every pair consists first of the transmitted signal (solid) and second the received reflected signal (dashed) that is delayed. It can be seen that the four RADAR devices are not transmitting at exactly the same time. They are timely shifted, but not waiting till the first RADAR has finalized its measurement, so there is an overlapping.

A synchronizing method is applied that ensures that all RADAR sensors belonging to one measurement setup are synchronized to exactly the same time base. Thus, a measurement cycle can be triggered that allows to measure in the example of Fig.4 with always four RADAR devices I, II, III, IV that have always the same time delay to each other. This delay is only a few microseconds. This allows the assumption that the measured scene does not have changed significantly due to said machine movements.

The lower graph in Fig. 4 is showing the difference of all four received signals from only the first RADAR transmitted frequency. The first received signal is the reflection of the own transmitted signal. The RADAR measures the difference of the actual transmitted and actual received signal which is drawn as fIF,I, it is constant as the distance has not changed significantly during the measurement. A dashed line fIF,max. represents the detection limit of the first RADAR. Any signal below this line can be detected, any other signal above this line can not be detected. The graph defined with flF,II shows the difference of the signals between the actual transmitted signal of RADAR I with the received signal of RADAR II. Due to its larger time difference, the frequency now is far higher, it is above the fIF, max. detection limit thus this signal is not detected. The second RADAR is not disturbing the first one. Similar it is with the other two RADAR devices according to the signals fIF, III and fIF, IV.

The time shift of the RADAR devices can be minimized to an optimum, that allows a very fast measurement cycle during which we can assume, that even machine vibrations have no relevant effect to the distance measurement. The individual measurements are strong linked to each other with only very little error. This is one of the main used features of the measurement system, that increases preciseness and allows a pose measurement on long distances, like 10x to 1000x the base distance between the RADAR devices.

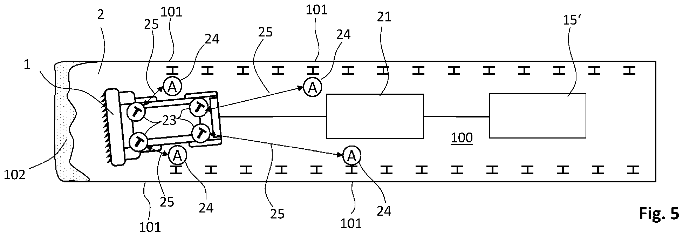

Figure 5 shows a UWB positioning unit 22 for determining the pose of the underground mobile machine 1 or in particular a part of the machine 1 within the heading 100, defined by the walling 101 of the heading 100. Attached to the walling 101 are depicted several anchors 24 and attached to the underground mobile machine 1 are arranged tags 23. The tags 23 are performed to communicate with the anchors 24, in particular, to calculate certain distances 24 between the tags 23 and the anchors 24.

By means of said WB or UWB positioning unit 22, the communication between the tags 23 and the anchors 24 over the distances 25 relate to an UWB-frequency-band relating to a frequency of 3GHz to 10GHz, preferred 5GHz to 8GHz and more preferred to 6.5GHz. In particular, the band is a part of the E-Band. By means of such a UWB-positioning unit 22, comprising a supply unit 21 and a computing unit 15' the pose of the underground mobile machine 1 or at least a part of the machine 1 can be determined within the heading 100. The tags 23 as well as the anchors 24 may have an own power supply e.g. by means of a battery or similar, and the tags 23 and the anchors 24 can communicate with the supply unit 21 and/or with the computing unit 15' wireless or by means of a wireless data connection. This UWB positioning unit 22 can be applied additionally to the pose control system 10 as described in conjunction with figure 1, e.g. for moved and controlled parts of the underground mobile machine 1 itself.

The present invention is not limited by the embodiment described above, which is represented as examples only and can be modified in various ways within the scope of protection defined by the appending patent claims.

### Reference Numbers:

- 1: underground mobile machine
- 2: tunnel drill
- 10: pose control system
- 11: RADAR antenna
- 12: RADAR reflecting module
- 13: RADAR aligning range
- 14: defined measuring position
- 15: computing unit
- 15': computing unit
- 16: voice coil
- 17: reflecting screen
- 18: mobile receiving means
- 18': carrier board
- 19: Radar ray
- 20: modulated movement
- 21: supply unit
- 22: UWB positioning unit
- 23: UWB tag
- 24: UWB anchor
- 25: distance

- 100: heading
- 101: walling / refinforcement
- 102: end face
- 103: longitudinal extension

- f: frequency
- t: time

## Claims

1. Method for controlling the pose of at least a part of an underground mobile machine (1) within a heading (100) by means of a pose control system (10), the method comprising computing the pose of at least the part of the underground mobile machine (1) by means of a computing unit (15) of the system (10),
**characterized in that** the method comprises at least the following steps:
- providing at least two RADAR antennas (11),
- providing at least one RADAR reflecting module (12),
- whereas the at least two RADAR antennas (11) and the at least one RADAR reflecting module (12) forming the pose control system (10),
so that the RADAR antennas (11) and the at least one RADAR reflecting module (12) are arranged in a triangular formation, -
identifying at least one defined measuring position (14) in the heading (100) distal to the mobile machine (1),
- defining a RADAR aligning range (13) between the mobile machine (1) and the defined measuring position (14) forming two end points, whereas
- at a first end point the at least two RADAR antennas (11) are arranged and
- at a second end point the at least one RADAR reflecting module (12) is arranged, and
- sending at least one RADAR ray with each of the RADAR antennas (11) towards the at least one RADAR reflecting module (12) and
- reflecting the RADAR ray by the at least one RADAR reflecting module (12) and
- receiving the at least one reflected RADAR ray (19) by the RADAR antennas (11) and
- computing, based on the received at least one reflected RADAR ray**,** the pose of at least the part of the underground mobile machine (1) by means of the computing unit (15) of the system (10).

2. Method according to claim 1,
**characterized in**
**that** the distance between the two RADAR antennas (11) and the at least one RADAR reflecting module (12) is measured in such a way that the RADAR aligning range (13) is 5 times to 1.000 times and/or 20 to 500 times and/or 50 to 150 times of the distance between the two RADAR antennas (11) at the one end point.

3. Method according to claim 1 or 2,
**characterized in**
**that** the RADAR antennas (11) are arranged at the underground mobile machine (1) spaced apart to each other and that the RADAR reflecting module (12) is arranged in the heading (100), in particular on a mobile receiving means (18) standing in the heading (100) or at the walling (101) of the heading (100).

4. Method according to one of the claims 1 to 3,
**characterized in**
**that** at least two, three or more RADAR reflecting modules (12) are arranged in the triangular formation combined with the RADAR antennas (11), whereas each RADAR reflecting module (12) reflects each of the RADAR rays send by both RADAR antennas (11) and both RADAR antennas (11) receive the RADAR rays which are computed by the computing unit (15) of the pose control system (10).

5. Method according to one of the claims 1 to 4,
**characterized in**
**that** the RADAR antennas (11) are operated by FMCW RADAR technology in a frequency range of at least a part of the E-band and/or in a frequency range of 60GHz to 90GHz and/or 70GHz to 85GHz and/or 76GHz to 81GHz.

6. Method according to one of the previous claims,
**characterized in**
**that** the RADAR antennas (11) emit RADAR rays which are modulated with an ascending and/or descending frequency in a repeating period, whereas the frequency emitted by a first RADAR antenna (11) is different to the frequency emitted by at least a second RADAR antenna (11).

7. Method according to any of the previous claims,
**characterized in**
**that** the RADAR reflecting module (12) features a voice coil (16) and a reflecting screen (17) for reflecting the RADAR rays, whereas the reflecting screen (17) is mechanically and/or dynamically excited with a back and forth movement (20) in the line of the RADAR aligning range (13) by means of the voice coil (16), whereas different RADAR reflecting modules (12) feature different exciting frequencies and/or moving patterns.

8. Method according to one of the previous claims,
**characterized in**
**that** the pose control system (10) comprises an UWB positioning unit (22) arranged in conjunction with the underground mobile machine (1), the UWB positioning unit (22) comprises tags (23) and anchors (24) communicating with each other, and
- the tags (23) are attached to the underground mobile machine (1) and the anchors (24) are arranged at the walling of the heading in such a position that the anchors (24) surround the underground mobile machine (1)
or, the other way around,
- the anchors (24) are attached to the underground mobile machine (1) and the tags (23) are arranged at the walling of the heading in such a position that the tags (23) surround the underground mobile machine (1),
- whereas the pose control system (10) calculates at least a part of the pose of the underground mobile machine (1) in the heading (100).

9. Method according to one of the previous claims,
**characterized in**
**that** at least three and preferred four RADAR antennas (11) are arranged at one of the end points in order to run a redundant RADAR measurement in conjunction with the at least one RADAR reflecting module (12).

10. System (10) for operating the method according to one of the claims 1 to 9,
**characterized in**
**that** the system (10) comprises the at least two RADAR antennas (11) and the at least one RADAR reflecting module (12), whereas the RADAR antennas (11) and the at least one RADAR reflecting module (12) are arranged in the triangular formation, whereas the defined measuring position (14) in the heading (100) distal to the mobile machine (1) is defined, and the RADAR aligning range (13) between the underground mobile machine (1) and the defined measuring position (14) forming two end points is defined, whereas at the first end point the at least two RADAR antennas (11) are arranged and at the second end point the at least one RADAR reflecting module (12) is arranged, and whereas the RADAR antennas (11) are each formed to send a RADAR ray to the at least one RADAR reflecting module (12) and the at least one RADAR reflecting module (12) is formed to reflect the RADAR ray towards the RADAR antennas (11) and the RADAR antennas (11) are formed to receive the reflected RADAR ray, whereas the computing unit (15) is formed for computing, based on the received at least one reflected RADAR ray, the pose of the at least one part of the underground mobile machine (1).

11. System (10) according to claim 10,
**characterized in**
**that** the RADAR antennas (11) are received on a carrier board (18) having main dimensions of less that 1,5m, preferred less than 75cm and most preferred less than 50cm and/or the RADAR reflecting modules (12) are received on a carrier board (18) having main dimensions of less than 1,5m, preferred less than 75cm and most preferred less than 50cm.

12. System (10) according to claim 5 and of of the claims 10 or 11,
**characterized in**
**that** the RADAR antennas (11) are provided with the FMCW RADAR technology in a frequency range of at least a part of the E-band and/or in a frequency range of 60GHz to 90GHz and/or 75GHz to 85GHz and/or 76GHz to 81 GHz and/or 57GHz to 64GHz.

13. System (10) according to claim 8 and of the claims 10 to 12,
**characterized in**
**that** the communication of the UWB positioning unit (22) in particular between the tags (23) and anchors (24) features a frequency in the range of 3GHz to 10GHz and/or 5GHz to 8GHz and/or 6GHz to 7GHz and/or having a band wide of 500MHz.

14. System (10) according to claim 7 and one of the claims 10 to 13, **characterized in**
**that** the RADAR reflecting module (12) features the voice coil (16) and the reflecting screen (17) for reflecting the RADAR rays, whereas the voice coil (16) is formed to mechanically and/or dynamically excite the reflecting screen (17) with a back and forth movement in the line of the RADAR aligning range (13), whereas different RADAR reflecting modules (12) feature different exciting frequencies or moving patterns.

15. System (10) according to one of the claims 10 to 14,
**characterized in**
**that** a RADAR ray emitted by a first RADAR antenna (11) and reflected by a RADAR reflecting module (12) is received by the first RADAR antenna (11) and at least by a second RADAR antenna.

## Patentansprüche

1. Verfahren zur Steuerung der Lage zumindest eines Teils einer unterirdischen mobilen Maschine (1) innerhalb eines Untergrundraums (100) mittels eines Lagesteuerungssystems (10), wobei das Verfahren die Berechnung der Lage zumindest dieses Teils der unterirdischen mobilen Maschine (1) mittels einer Recheneinheit (15) des Systems (10) umfasst,
**dadurch gekennzeichnet,**
**dass** das Verfahren mindestens die folgenden Schritte umfasst:
- Bereitstellen von mindestens zwei RADAR-Antennen (11),
- Bereitstellen mindestens eines RADAR-Reflexionsmoduls (12),
- wobei die mindestens zwei RADAR-Antennen (11) und das mindestens eine RADAR-Reflexionsmodul (12) das Lageregelungssystem (10) bilden, sodass die RADAR-Antennen (11) und das mindestens eine RADAR-Reflexionsmodul (12) in einer Dreiecksformation angeordnet sind,
- Identifizieren mindestens einer definierten Messposition (14) in der Fahrtrichtung (100) distal zur mobilen Maschine (1),
- Festlegen eines RADAR-Ausrichtungsbereichs (13) zwischen der mobilen Maschine (1) und der definierten Messposition (14), die zwei Endpunkte bilden, wobei
- an einem ersten Endpunkt die mindestens zwei RADAR-Antennen (11) angeordnet sind und
- an einem zweiten Endpunkt das mindestens eine RADAR-Reflexionsmodul (12) angeordnet ist, und
- Senden mindestens eines RADAR-Strahls mit jeder der RADAR-Antennen (11) in Richtung des mindestens einen RADAR-Reflexionsmoduls (12) und
- Reflektieren des RADAR-Strahls durch das mindestens eine RADAR- -Reflexionsmodul (12) und
- Empfangen des mindestens einen reflektierten RADAR-Strahls (19) durch die RADAR-Antennen (11) und
- Berechnen, basierend auf dem empfangenen mindestens einen reflektierten RADAR-Strahl, der Lage zumindest eines Teils der unterirdischen mobilen Maschine (1) mittels der Recheneinheit (15) des Systems (10).

2. Verfahren nach Anspruch 1,
**dadurch gekennzeichnet,**
**dass** der Abstand zwischen den beiden RADAR-Antennen (11) und dem mindestens einen RADAR-Reflexionsmodul (12) so gemessen wird, dass der RADAR-Ausrichtungsbereich (13) das 5- bis 1.000-fache und/oder das 20- bis 500-fache und/oder das 50- bis 150-fache des Abstands zwischen den beiden RADAR-Antennen (11) an dem einen Endpunkt beträgt.

3. Verfahren nach Anspruch 1 oder 2,
**dadurch gekennzeIchnet,**
**dass** die RADAR-Antennen (11) an der unterirdischen mobilen Maschine (1) voneinander beabstandet angeordnet sind und dass das RADAR-Reflexionsmodul (12) im Untergrundraum (100) angeordnet ist, insbesondere an einer im Stollen (100) stehenden mobilen Empfangseinrichtung (18) oder an der Untergrundraumwand (101) des Untergrundraums (100).

4. Verfahren nach einem der Ansprüche 1 bis 3,
**dadurch gekennzeIchnet,**
**dass** mindestens zwei, drei oder mehr RADAR-Reflexionsmodule (12) in der mit den RADAR-Antennen (11) kombiniert ist, wobei jedes RADAR-Reflexionsmodul (12) jeden der von beiden RADAR-Antennen (11) ausgesendeten RADAR-Strahlen reflektiert und be e beiden RADAR-Antennen (11) die RADAR-Strahlen empfangen, die von der Recheneinheit (15) des Lageregelungssystems (10) ausgewertet werden.

5. Verfahren gemäß einem der Ansprüche 1 bis 4,
**dadurch gekennzeIchnet,**
**dass** die RADAR-Antennen (11) mittels FMCW-RADAR-Technologie in einem Frequenzbereich von mindestens einem Teil des E-Bands und/oder in einem Frequenzbereich von 60 GHz bis 90 GHz und/oder 70 GHz bis 85 GHz und/oder 76 GHz bis 81 GHz betrieben werden.

6. Verfahren gemäß einem der vorstehenden Ansprüche,
**dadurch gekennzeIchnet,**
**dass** die RADAR-Antennen (11) RADAR-Strahlen aussenden, die in einem sich wiederholenden Zyklus mit einer ansteigenden und/oder abfallenden Frequenz moduliert sind, wobei sich die von einer ersten RADAR-Antenne (11) ausgesendete Frequenz von der von mindestens einer zweiten RADAR-Antenne (11) ausgesendeten Frequenz unterscheidet.

7. Verfahren nach einem der vorstehenden Ansprüche,
**dadurch gekennzeIchnet,**
**dass** das RADAR-Reflexionsmodul (12) eine Schwingspule (16) und einen Reflexionsschirm (17) zum Reflektieren der RADAR-Strahlen aufweist, wobei der Reflexionsschirm (17) mittels der Schwingspule (16) in der Richtung des RADAR-Ausrichtungsbereichs (13) mit einer Hin- und Herbewegung (20) angeregt wird, wobei verschiedene RADAR-Reflexionsmodule (12) unterschiedliche Anregungsfrequenzen und/oder Bewegungsmuster aufweisen.

8. Verfahren gemäß einem der vorstehenden Ansprüche,
**dadurch gekennzeichnet,**
**dass** das Positionssteuerungssystem (10) eine UWB-Positionierungseinheit (22) umfasst, die in Verbindung mit der unterirdischen mobilen Maschine (1) angeordnet ist, wobei die UWB-Positionierungseinheit (22) Tags (23) und Anker (24) umfasst, die miteinander kommunizieren, und
- die Tags (23) an der unterirdischen mobilen Maschine (1) angebracht sind und die Anker (24) an der Untergrundraumwand in einer solchen Position angeordnet sind, dass die Anker (24) die unterirdische mobile Maschine (1) umgeben oder umgekehrt,
- die Anker (24) an der unterirdischen mobilen Maschine (1) angebracht sind und die Tags (23) an der Untergrundraumwand in einer solchen Position angeordnet sind, dass die Tags (23) die unterirdische mobile Maschine (1) umgeben,
- wobei das Lage-Steuerungssystem (10) zumindest einen Teil der Lage der unterirdischen mobilen Maschine (1) im Untergrundraum (100) berechnet.

9. Verfahren nach einem der vorstehenden Ansprüche,
**dadurch gekennzeichnet,**
**dass** mindestens drei und vorzugsweise vier RADAR-Antennen (11) an einem der Endpunkte angeordnet sind, um in Verbindung mit dem mindestens einen RADAR-Reflexionsmodul (12) eine redundante RADAR-Messung durchzuführen.

10. System (10) zur Durchführung des Verfahrens gemäß einem der Ansprüche 1 bis 9,
**dadurch gekennzeichnet,**
**dass** das System (10) die mindestens zwei RADAR-Antennen (11) und das mindestens eine RADAR-Reflexionsmodul (12) umfasst, wobei die RADAR-Antennen (11) und das mindestens eine RADAR-Reflexionsmodul (12) in einer Dreiecksformation angeordnet sind, wobei die definierte Messposition (14) in der Vortriebsrichtung (100) distal zur unterirdischen mobilen Maschine (1) definiert ist und der RADAR-Ausrichtungsbereich (13) zwischen der unterirdischen mobilen Maschine (1) und der definierten Messposition (14), die zwei Endpunkte bildet, definiert ist, wobei am ersten Endpunkt die mindestens zwei RADAR-Antennen (11) angeordnet sind und am zweiten Endpunkt das mindestens eine RADAR-Reflexionsmodul (12) angeordnet ist, und wobei die RADAR-Antennen (11) jeweils so ausgebildet sind, dass sie einen RADAR-Strahl an das mindestens eine RADAR-Reflexionsmodul (12) senden, und das mindestens eine RADAR-Reflexionsmodul (12) so ausgebildet ist, dass es den RADAR-Strahl in Richtung der RADAR-Antennen (11) zu reflektieren und die RADAR-Antennen (11) so ausgebildet sind, dass sie den reflektierten RADAR-Strahl empfangen, wobei die Recheneinheit (15) dazu ausgebildet ist, auf der Grundlage des empfangenen mindestens einen reflektierten RADAR-Strahls die Lage des mindestens einen Teils der unterirdischen mobilen Maschine (1) zu berechnen.

11. System (10) nach Anspruch 10,
**dadurch gekennzeIchnet,**
**dass** die RADAR-Antennen (11) auf einer Trägerplatine (18) mit Hauptabmessungen von weniger als 1,5 m, vorzugsweise weniger als 75 cm und am bevorzugtesten weniger als 50 cm, und/oder die RADAR-Reflexionsmodule (12) auf einer Trägerplatine (18) mit Hauptabmessungen von weniger als 1,5 m, vorzugsweise weniger als 75 cm und am bevorzugtesten weniger als 50 cm.

12. System (10) nach Anspruch 5 und nach einem der Ansprüche 10 oder 11,
**dadurch gekennzeIchnet,**
**dass** die RADAR-Antennen (11) mit der FMCW-RADAR-Technologie in einem Frequenzbereich von mindestens einem Teil des E-Bands und/oder in einem Frequenzbereich von 60 GHz bis 90 GHz und/oder 75 GHz bis 85 GHz und/oder 76 GHz bis 81 GHz und/oder 57 GHz bis 64 GHz ausgestattet sind.

13. System (10) nach Anspruch 8 und den Ansprüchen 10 bis 12,
**dadurch gekennzeIchnet,**
**dass** die Kommunikation der UWB-Ortungseinheit (22), insbesondere zwischen den Tags (23) und den Ankern (24), eine Frequenz im Bereich von 3 GHz bis 10 GHz und/oder 5 GHz bis 8 GHz und/oder 6 GHz bis 7 GHz aufweist und/oder eine Bandbreite von 500 MHz hat.

14. System (10) nach Anspruch 7 und einem der Ansprüche 10 bis 13,
**dadurch gekennzeIchnet,**
**dass** das RADAR-Reflexionsmodul (12) die Schwingspule (16) und den Reflexionsschirm (17) zum Reflektieren der RADAR-Strahlen aufweist, wobei die Schwingspule (16) so ausgebildet ist, dass sie den Reflexionsschirm (17) mechanisch und/oder dynamisch mit einer Hin- und Herbewegung in der Linie des RADAR-Ausrichtungsbereichs (13) zu versetzen, wobei verschiedene RADAR-Reflexionsmodule (12) unterschiedliche Anregungsfrequenzen oder Bewegungsmuster aufweisen.

15. System (10) gemäß einem der Ansprüche 10 bis 14,
**dadurch gekennzeIchnet,**
**dass** ein von einer ersten RADAR-Antenne (11) ausgesendeter und von einem RADAR-Reflexionsmodul (12) reflektierter RADAR-Strahl von der ersten RADAR-Antenne (11) und mindestens einer zweiten RADAR-Antenne empfangen wird.

## Revendications

1. Procédé de commande de la position d'au moins une partie d'une machine mobile souterraine (1) à l'intérieur d'un tunnel (100) au moyen d'un système de commande de position (10), le procédé comprenant le calcul de la position d'au moins cette partie de la machine mobile souterraine (1) au moyen d'une unité de calcul (15) du système (10),
**caractérisé en ce**
**que** le procédé comprend au moins les étapes suivantes:
- la mise en place d'au moins deux antennes RADAR (11),
- fournir au moins un module de réflexion RADAR (12),
- lesdites au moins deux antennes RADAR (11) et ledit au moins un module de réflexion RADAR (12) formant le système de contrôle de posture (10),
de sorte que les antennes RADAR (11) et le au moins un module de réflexion RADAR (12) sont disposés en formation triangulaire,
- identifiant au moins une position de mesure définie (14) dans la trajectoire (100) distale par rapport à la machine mobile (1),
- définir une plage d'alignement RADAR (13) entre la machine mobile (1) et la position de mesure définie (14) formant deux points d'extrémité, tandis que
- à un premier point d'extrémité sont disposées les au moins deux antennes RADAR (11) et
- à un deuxième point d'extrémité est disposé le au moins un module de réflexion RADAR (12), et
- émettre au moins un faisceau RADAR avec chacune des antennes RADAR (11) en direction du au moins un module de réflexion RADAR (12) et
- réfléchir le faisceau radar par le au moins un module de réflexion RADAR (12) et
- recevoir le ou les faisceaux RADAR réfléchis (19) par les antennes RADAR (11) et
- calculer, sur la base du ou des rayons RADAR réfléchis reçus,
- la position d'au moins une partie de la machine mobile souterraine (1) au moyen de l'unité de calcul (15) du système (10).

2. Procédé selon la revendication 1,
**caractérisé en ce**
**que** la distance entre les deux antennes RADAR (11) et le au moins un module réfléchissant RADAR (12) est mesurée de telle sorte que la plage d'alignement RADAR (13) soit comprise entre 5 et 1 000 fois et/ou entre 20 et 500 fois et/ou entre 50 et 150 fois la distance entre les deux antennes RADAR (11) à l'une des extrémités.

3. Procédé selon la revendication 1 ou 2,
caractérisé en ce
le fait que les antennes RADAR (11) sont disposées sur la machine mobile souterraine (1) à distance les unes des autres et que le module de réflexion RADAR (12) est disposé dans la galerie (100), en particulier sur un moyen de réception mobile (18) situé dans la galerie (100) ou sur la paroi (101) de la galerie (100).

4. Procédé selon l'une des revendications 1 à 3,
caractérisé en ce
le fait qu'au moins deux, trois ou plusieurs modules de réflexion radar (12) sont disposés en formation triangulaire combinée avec les antennes radar (11), chaque module de réflexion radar (12) réfléchissant chacun des faisceaux radar émis par les deux antennes radar (11) et l' s deux antennes radar (11) recevant les faisceaux radar qui sont traités par l'unité de calcul (15) du système de contrôle de position (10).

5. Procédé selon l'une des revendications 1 à 4,
caractérisé en ce
le fait que les antennes RADAR (11) sont exploitées par la technologie RADAR FMCW dans une gamme de fréquences couvrant au moins une partie de la bande E et/ou dans une gamme de fréquences comprise entre 60 GHz et 90 GHz et/ou entre 70 GHz et 85 GHz et/ou entre 76 GHz et 81 GHz.

6. Procédé selon l'une des revendications précédentes,
caractérisé en ce
le fait que les antennes RADAR (11) émettent des faisceaux RADAR qui sont modulés avec une fréquence croissante et/ou décroissante selon une période répétitive, tandis que la fréquence émise par une première antenne RADAR (11) est différente de la fréquence émise par au moins une deuxième antenne RADAR (11).

7. Procédé selon l'une quelconque des revendications précédentes,
**caractérisé en ce**
**que** le module de réflexion radar (12) comprend une bobine mobile (16) et un écran de réflexion (17) destiné à réfléchir les faisceaux radar, tandis que l'écran de réflexion (17) est excité mécaniquement et/ou dynamiquement par un mouvement de va-et-vient (20) dans l'axe de la zone d'alignement radar (13) au moyen de la bobine mobile (16), tandis que différents modules de réflexion radar (12) présentent différentes fréquences d'excitation et/ou différents schémas de mouvement.

8. Procédé selon l'une des revendications précédentes,
caractérisé en ce
le fait que le système de contrôle de position (10) comprend une unité de positionnement UWB (22) disposée en association avec la machine mobile souterraine (1), l'unité de positionnement UWB (22) comprend des balises (23) et des ancrages (24) communiquant entre eux, et
- les balises (23) sont fixées à la machine mobile souterraine (1) et les ancrages (24) sont disposés sur la paroi de la galerie dans une position telle que les ancrages (24) entourent la machine mobile souterraine (1)
ou, inversement,
- les balises d'ancrage (24) sont fixées à la machine mobile souterraine (1) et les balises (23) sont disposées sur la paroi de la galerie dans une position telle que les balises (23) entourent la machine mobile souterraine (1),
- tandis que le système de contrôle de position (10) calcule au moins une partie de la position de la machine mobile souterraine (1) dans la galerie (100).

9. Procédé selon l'une des revendications précédentes,
caractérisé en ce
le fait qu'au moins trois, et de préférence quatre, antennes RADAR (11) sont disposées à l'un des points d'extrémité afin d'effectuer une mesure RADAR redondante en conjonction avec le au moins un module de réflexion RADAR (12).

10. Système (10) destiné à mettre en œuvre le procédé selon l'une des revendications 1 à 9,
**caractérisé en ce**
**que** le système (10) comprend au moins deux antennes RADAR (11) et au moins un module de réflexion RADAR (12), les antennes RADAR (11) et le module de réflexion RADAR (12) étant disposés en formation triangulaire, la position de mesure (14) définie dans la direction (100) distale par rapport à la machine mobile (1) est définie, et la plage d'alignement RADAR (13) entre la machine mobile souterraine (1) et la position de mesure définie (14) formant deux points d'extrémité est définie, les au moins deux antennes RADAR (11) étant disposées au premier point d'extrémité et le au moins un module de réflexion RADAR (12) est disposé, et alors que les antennes RADAR (11) sont chacune conçues pour envoyer un faisceau RADAR vers le au moins un module de réflexion RADAR (12) et que le au moins un module de réflexion RADAR (12) est conçu pour réfléchir le faisceau RADAR vers les antennes RADAR (11) et les antennes RADAR (11) sont conçues pour recevoir le faisceau RADAR réfléchi, tandis que l'unité de calcul (15) est conçue pour calculer, sur la base du ou des faisceaux RADAR réfléchis reçus, la position de la ou des parties de la machine mobile souterraine (1).

11. Système (10) selon la revendication 10,
caractérisé en ce
le fait que les antennes RADAR (11) sont montées sur une carte support (18) ayant des dimensions principales inférieures à 1,5 m, de préférence inférieures à 75 cm et de manière encore plus préférée inférieures à 50 cm, et/ou que les modules de réflexion RADAR (12) sont montés sur une carte support (18) ayant des dimensions principales inférieures à 1,5 m, de préférence inférieures à 75 cm et, de manière encore plus préférée, inférieures à 50 cm.

12. Système (10) selon la revendication 5 et selon l'une des revendications 10 ou 11,
caractérisé en ce
le fait que les antennes RADAR (11) sont équipées de la technologie RADAR FMCW dans une gamme de fréquences couvrant au moins une partie de la bande E et/ou dans une gamme de fréquences de 60 GHz à 90 GHz et/ou de 75 GHz à 85 GHz et/ou de 76 GHz à 81 GHz et/ou de 57 GHz à 64 GHz.

13. Système (10) selon la revendication 8 et selon les revendications 10 à 12,
**caractérisé en ce**
**que** la communication de l'unité de positionnement UWB (22), en particulier entre les balises (23) et les points d'ancrage (24), se **caractérise par** une fréquence comprise dans la plage de 3 GHz à 10 GHz et/ou de 5 GHz à 8 GHz et/ou de 6 GHz à 7 GHz et/ou par une largeur de bande de 500 MHz.

14. Système (10) selon la revendication 7 et l'une des revendications 10 à 13,
**caractérisé en ce**
**que** le fait que le module de réflexion radar (12) comprend la bobine mobile (16) et l'écran de réflexion (17) pour réfléchir les faisceaux radar, tandis que la bobine mobile (16) est conçue pour exciter mécaniquement et/ou dynamiquement l'écran de réflexion (17) par un mouvement de va-et-vient dans la ligne de la plage d'alignement radar (13), tandis que différents modules de réflexion radar (12) présentent différentes fréquences d'excitation ou différents schémas de mouvement.

15. Système (10) selon l'une des revendications 10 à 14,
caractérisé en ce
le fait qu'un faisceau radar émis par une première antenne radar (11) et réfléchi par un module de réflexion radar (12) est reçu par la première antenne radar (11) et au moins par une deuxième antenne radar.
